(19)

Europäisches Patentamt
European Patent Office
Office européen des brevets

(11) **EP 4 429 328 A1**

(12) **EUROPEAN PATENT APPLICATION**
published in accordance with Art. 153(4) EPC

(43) Date of publication:
**11.09.2024 Bulletin 2024/37**

(21) Application number: **22897817.7**

(22) Date of filing: **22.11.2022**

(51) International Patent Classification (IPC):
**H04W 36/30** (2009.01)  **H04B 17/391** (2015.01)

(52) Cooperative Patent Classification (CPC):
**G06F 18/214; G06N 20/00; H04B 17/391;
H04W 36/30**

(86) International application number:
**PCT/CN2022/133578**

(87) International publication number:
**WO 2023/093734 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021  CN 202111406870**

(71) Applicant: **Huawei Technologies Co., Ltd.
Shenzhen, Guangdong 518129 (CN)**

(72) Inventors:
• **ZHONG, Zhimeng
Shenzhen, Guangdong 518129 (CN)**

• **WU, Yiqun
Shenzhen, Guangdong 518129 (CN)**
• **SUN, Yan
Shenzhen, Guangdong 518129 (CN)**
• **CHAI, Xiaomeng
Shenzhen, Guangdong 518129 (CN)**
• **LI, Chao
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA PROCESSING METHOD AND COMMUNICATION DEVICE**

(57)    This application provides a data processing method and a communication apparatus. The method includes: receiving or sending a plurality of reference signals; obtaining a first channel data set, where the first channel data set is a set of a plurality of pieces of channel data obtained based on the plurality of reference signals; obtaining a data quality screening policy, where the data quality screening policy is used to obtain, through screening, model training data that meets a data quality requirement; and screening the channel data in the first channel data set according to the data quality screening policy, to obtain a training data set. In this way, quality of the training data for model training is improved, so that a trained intelligent model meets a performance requirement.

200

S201: Obtain a first channel data set, where the first channel data set is a set of channel data obtained by measuring a plurality of reference signals

S202: Obtain a data quality screening policy, where the data quality screening policy is used to obtain, through screening, model training data that meets a data quality requirement

S203: Screen the channel data in the first channel data set according to the data quality screening policy, to obtain a training data set

FIG. 2

**Description**

This application claims priority to Chinese Patent Application No. 202111406870.5, filed with the China National Intellectual Property Administration on November 24, 2021 and entitled "DATA PROCESSING METHOD AND COMMUNICATION APPARATUS", which is incorporated herein by reference in its entirety.

**TECHNICAL FIELD**

This application relates to the communication field, and more specifically, to a data processing method and a communication apparatus.

**BACKGROUND**

Applying artificial intelligence (artificial intelligence, AI) to a wireless communication system to enhance communication performance has become a current research hotspot. Radio channel data is necessary data for applying the AI, training an AI model, and verifying performance of the AI model.

Simulated channel data may be obtained by performing modeling on a radio channel. However, a radio channel environment is complex and changeable, and the simulated channel data is different from real channel data. Therefore, currently, an actually measured channel data set obtained by measuring a reference signal by a wireless communication apparatus is mainly used as a training sample or a sample label of the AI model. However, in practice, actually measured channel data is affected by noise of an internal component of a communication apparatus, a calibration error of a communication system, and the like. Consequently, during verification, a large deviation still exists in performance of an AI model obtained based on the actually measured channel data.

**SUMMARY**

Embodiments of this application provide a data processing method and a communication apparatus, to improve quality of training data for model training, so that a trained intelligent model meets a performance requirement.

According to a first aspect, a communication method is provided. The method may be performed by a communication device or a module (such as a chip) configured in (or used in) a communication device.

The method includes: receiving or sending a plurality of reference signals; obtaining a first channel data set, where the first channel data set is a set of a plurality of pieces of channel data obtained based on the plurality of reference signals; obtaining a data quality screening policy, where the data quality screening policy is used to obtain, through screening, model training data that meets a data quality requirement; and screening the channel data in the first channel data set according to the data quality screening policy, to obtain a training data set.

According to the foregoing solution, a first apparatus may obtain, according to the data quality screening policy, channel data that meets the data quality requirement from a channel data set obtained through measurement, so that an intelligent model obtained through training based on a screened training data set can meet a performance requirement. Therefore, the intelligent model is used in wireless communication to improve communication quality.

With reference to the first aspect, in some implementations of the first aspect, the data quality screening policy includes one or more of the following:

a screening policy based on received power stability of a same reference signal;
a screening policy based on transmission delay stability of a reference signal;
a screening policy based on phase stability of different channel data components corresponding to a same transceiver antenna pair;
a screening policy based on a received signal-to-noise ratio of a reference signal; and
a screening policy based on channel type diversity.

According to the foregoing solution, the data quality screening policy may be a screening policy based on one or more of a received power stability requirement, a transmission delay stability requirement of the reference signal, a phase stability requirement, a received signal-to-noise ratio requirement of the reference signal, and a diversity requirement of the training data. In this way, the first apparatus can obtain, through screening, channel data that meets the requirements as the training data, and eliminate channel data that cannot truly reflect a channel state due to a channel data error caused by noise of a component of a communication apparatus for measuring the channel data, time and/or frequency asynchronization of a reference signal transceiver apparatus, and the like. Performance of the intelligent model is improved, so that the intelligent model can be used in a communication system to improve communication quality.

With reference to the first aspect, in some implementations of the first aspect, the screening policy based on received power stability of a same reference signal includes: selecting channel data that meets the following received power stability requirement as the training data, where

a difference value between received powers of receiving a same reference signal by different receive antennas corresponding to one piece of channel data is less than or equal to a first threshold.

With reference to the first aspect, in some implementations of the first aspect, the different receive antennas are two receive antennas that have adjacent spatial locations and a same polarization direction.

With reference to the first aspect, in some implementations of the first aspect, the screening policy based on transmission delay stability of a reference signal includes: selecting channel data that meets the following delay stability requirements as the training data, where

a difference value between transmission delays of reference signals of different transceiver antenna pairs corresponding to one piece of channel data is less than or equal to a second threshold, where the transceiver antenna pair includes one transmit antenna corresponding to the one piece of channel data and a receive antenna corresponding to the one piece of channel data.

With reference to the first aspect, in some implementations of the first aspect, the screening policy based on phase stability of different channel data components corresponding to a same transceiver antenna pair includes: selecting channel data that meets the following phase stability requirement as the training data, where

a phase difference value between channel data components of a same transceiver antenna pair in a plurality of pieces of channel data obtained within a preset interval is less than or equal to a third threshold, where the transceiver antenna pair includes one transmit antenna corresponding to one piece of channel data and a receive antenna corresponding to the one piece of channel data.

With reference to the first aspect, in some implementations of the first aspect, the screening policy based on a received signal-to-noise ratio of a reference signal includes: using channel data corresponding to a reference signal whose received signal-to-noise ratio is greater than or equal to a fourth threshold as the training data.

With reference to the first aspect, in some implementations of the first aspect, the screening policy based on channel type diversity includes one or more of the following:

N pieces of line of sight LOS channel data and M pieces of non-line-of-sight NLOS channel data are selected to form the training data set, where N and M are positive integers;

a ratio of the LOS channel data to the NLOS channel data in the training data set is a preset ratio; and

Q pieces of channel data are selected to form the training data set, where the Q pieces of channel data include at least the N pieces of LOS channel data and include at least the M pieces of NLOS channel data, and Q>N+M.

With reference to the first aspect, in some implementations of the first aspect, the sending a plurality of reference signals includes: sending the plurality of reference signals to a second apparatus; and the obtaining a first channel data set includes: receiving the first channel data set from the second apparatus.

According to the foregoing solution, the first apparatus may send the reference signal to the second apparatus, and obtain the channel data set obtained by measuring the reference signal by the first apparatus, so that actually measured channel data can be obtained, and data obtained by screening the actually measured channel data can be used for training the intelligent model.

With reference to the first aspect, in some implementations of the first aspect, the receiving a plurality of reference signals includes: receiving the plurality of reference signals from a second apparatus; and the obtaining a first channel data set includes: measuring the plurality of reference signals to obtain the first channel data set.

According to the foregoing solution, the first apparatus may receive the reference signal from the second apparatus, and measure the reference signal to obtain actually measured channel data, so that data obtained by screening the actually measured channel data can be used for training the intelligent model.

With reference to the first aspect, in some implementations of the first aspect, the method further includes: training the intelligent model by using the training data set.

According to the foregoing solution, the first apparatus may be a training apparatus of the intelligent model. After data quality screening is performed on the channel data obtained through actual measurement (that is, actual measuring), model training is performed by using channel data that meets the requirement and that is obtained through screening. An intelligent model that meets the performance requirement can be obtained.

With reference to the first aspect, in some implementations of the first aspect, the obtaining a data quality screening policy includes: receiving first information, where the first information indicates the data quality screening policy. With reference to the first aspect, in some implementations of the first aspect, the first information is included in a first message, and the first message is used to request the training data set of the intelligent model. The method further includes: sending the training data set.

According to the foregoing solution, the channel data may be collected by the first apparatus, and training of the intelligent model may be performed by another node (a third apparatus) in a network. The third apparatus may indicate the data quality screening policy to the first apparatus based on the data quality requirement, so that the first apparatus can provide, for the third apparatus, the channel data that meets the data quality requirement, and the intelligent model obtained through training by the third apparatus based on a channel data set that meets the requirement can meet the performance requirement.

With reference to the first aspect, in some implementations of the first aspect, the first message further includes second information, and the second information indicates a dimension arrangement manner of the training data set. The screening the channel data in the first channel data set according to the data quality screening policy, to obtain a training data set includes: screening the first channel data set according to the data quality screening policy, to obtain a plurality of pieces of channel data; and arranging the plurality of pieces of channel data in the dimension arrangement manner, to obtain the training data set.

According to the foregoing solution, the first apparatus may perform dimension conversion on the channel data based on the dimension arrangement manner, so that the training data meets a training data dimension definition of the intelligent model.

With reference to the first aspect, in some implementations of the first aspect, the first message further includes third information, and the third information indicates to filter the channel data obtained through screening. The screening the channel data in the first channel data set according to the data quality screening policy, to obtain a training data set includes: screening the first channel data set according to the data quality screening policy, to obtain the plurality of pieces of channel data; and filtering the plurality of pieces of channel data to obtain the training data set, where the training data set includes data obtained by filtering the plurality of pieces of channel data.

According to the foregoing solution, the first apparatus may filter the channel data to reduce noise interference.

With reference to the first aspect, in some implementations of the first aspect, the first information is included in a second message, and the second message is used to request to evaluate channel data that meets the data quality requirement in the channel data set. The method further includes: sending fourth information, where the fourth information indicates a data amount, and the data amount is an amount of the data that meets the data quality requirement in the channel data set; receiving a first message, where the first message is used to request the training data set; and sending the training data set.

With reference to the first aspect, in some implementations of the first aspect, the first message includes the second information and/or the third information, the second information indicates the dimension arrangement manner of the training data set, and the third information indicates to filter the channel data obtained through screening.

According to a second aspect, a data processing method is provided. The method may be performed by a communication device or a module (such as a chip) configured in (or used in) the communication device.

The method includes: sending first information, where the first information indicates a data quality screening policy, and the data quality screening policy is used to obtain, through screening, model training data that meets a data quality requirement; receiving a training data set from a first apparatus, where the training data set includes channel data that meets the data quality requirement; and training an intelligent model by using the training data set.

With reference to the second aspect, in some implementations of the second aspect, the data quality screening policy includes one or more of the following:

a screening policy based on received power stability of a same reference signal;
a screening policy based on transmission delay stability of a reference signal;
a screening policy based on phase stability of different channel data components corresponding to a same transceiver antenna pair;
a screening policy based on a received signal-to-noise ratio of a reference signal; and
a screening policy based on channel type diversity.

With reference to the second aspect, in some implementations of the second aspect, the screening policy based on received power stability of a same reference signal includes: selecting channel data that meets the following received power stability requirement as the training data, where
a difference value between received powers of receiving a same reference signal by different receive antennas corresponding to one piece of channel data is less than or equal to a first threshold.

With reference to the second aspect, in some implementations of the second aspect, the different receive antennas are two receive antennas that have adjacent spatial locations and a same polarization direction.

With reference to the second aspect, in some implementations of the second aspect, the screening policy based on transmission delay stability of a reference signal includes: selecting channel data that meets the following delay stability requirement as the training data, where
a difference value between transmission delays of reference signals of different transceiver antenna pairs corresponding to one piece of channel data is less than or equal to a second threshold, where the transceiver antenna pair includes one transmit antenna corresponding to the one piece of channel data and a receive antenna corresponding to the one piece of channel data.

With reference to the second aspect, in some implementations of the second aspect, the screening policy based on phase stability of different channel data components corresponding to a same transceiver antenna pair includes: selecting channel data that meets the following phase stability requirement as the training data, where a phase difference value between channel data components of a same transceiver antenna pair in a plurality of pieces of channel data obtained within a preset interval is less than or equal to a third threshold, where the transceiver antenna pair includes one transmit antenna corresponding to one piece of channel data and a receive antenna corresponding to the one piece of channel data.

With reference to the second aspect, in some implementations of the second aspect, the screening policy based on a received signal-to-noise ratio of a reference signal includes: using channel data corresponding to a reference signal whose received signal-to-noise ratio is greater than or equal to a fourth threshold as the training data.

With reference to the second aspect, in some implementations of the second aspect, the screening policy based on channel type diversity includes one or more of the following:

N pieces of line of sight LOS channel data and M pieces of non-line-of-sight NLOS channel data are selected to form the training data set, where N and M are positive integers;
a ratio of the LOS channel data to the NLOS channel data in the training data set is a preset ratio; and
Q pieces of channel data are selected to form the training data set, where the Q pieces of channel data include at least the N pieces of LOS channel data and include at least the M pieces of NLOS channel data, and Q>N+M.

With reference to the second aspect, in some implementations of the second aspect, the first information is included in a first message, and the first message is used to request the training data set of the intelligent model.

With reference to the second aspect, in some implementations of the second aspect, the first message further includes second information, the second information indicates a dimension arrangement manner of the training data set, and an arrangement manner of channel data in the training data set is the dimension arrangement manner.

With reference to the second aspect, in some implementations of the second aspect, the first message further includes third information, and the third information indicates to filter channel data obtained through screening.

With reference to the second aspect, in some implementations of the second aspect, the first information is included in a second message, the second message is used to request to evaluate channel data that meets the data quality requirement in the channel data set. The method further includes: receiving fourth information from the first apparatus, where the fourth information indicates a data amount, and the data amount is an amount of the data that meets the data quality requirement in the channel data set; and sending the first message to the first apparatus, where the first message is used to request the training data set.

With reference to the second aspect, in some implementations of the second aspect, the first message includes the second information and/or the third information, the second information indicates the dimension arrangement manner of the training data set, and the third information indicates to filter the channel data obtained through screening.

According to a third aspect, a communication apparatus is provided. In a design, the apparatus may include modules that are in one-to-one correspondence with the method/operations/steps/actions described in the first aspect. The modules may be hardware circuits or software, or may be implemented by a combination of the hardware circuits and the software. In a design, the apparatus includes: a transceiver unit, configured to receive or send a plurality of reference signals; an obtaining unit, configured to obtain a first channel data set, where the first channel data set is a set of a plurality of pieces of channel data obtained based on the plurality of reference signals, and the obtaining unit is further configured to obtain a data quality screening policy, where the data quality screening policy is used to obtain, through screening, model training data that meets a data quality requirement; and a processing unit, configured to: screen the channel data in the first channel data set according to the data quality screening policy, to obtain a training data set.

The data quality screening policy is the same as that in the first aspect, and details are not described herein again.

With reference to the third aspect, in some implementations of the third aspect, the transceiver unit is specifically configured to send the plurality of reference signals to a second apparatus; and the obtaining unit is specifically configured to receive the first channel data set from the second apparatus.

With reference to the third aspect, in some implementations of the third aspect, the transceiver unit is specifically configured to receive the plurality of reference signals from the second apparatus; and the obtaining unit is specifically configured to measure the plurality of reference signals to obtain the first channel data set.

With reference to the third aspect, in some implementations of the third aspect, the processing unit is further configured to train the intelligent model by using the training data set.

With reference to the third aspect, in some implementations of the third aspect, the obtaining unit is specifically configured to receive first information, where the first information indicates the data quality screening policy.

With reference to the third aspect, in some implementations of the third aspect, the first information is included in a first message, the first message is used to request the training data set of the intelligent model, and the transceiver unit is further configured to send the training data set.

With reference to the third aspect, in some implementations of the third aspect, the first message further includes second information, the second information indicates a dimension arrangement manner of the training data set, and the processing unit is further configured to: screen the first channel data set according to the data quality screening policy, to obtain a plurality of pieces of channel data; and arrange the plurality of pieces of channel data in the dimension arrangement manner, to obtain the training data set.

With reference to the third aspect, in some implementations of the third aspect, the first message further includes third information, and the third information indicates to filter the channel data obtained through screening; and the processing unit is specifically configured to: screen the first channel data set according to the data quality screening policy, to obtain a plurality of pieces of channel data; and filter the plurality of pieces of channel data to obtain the training data set, where the training data set includes data obtained by filtering the plurality of pieces of channel data.

With reference to the third aspect, in some implementations of the third aspect, the first information is included in a second message, the second message is used to request to evaluate channel data that meets the data quality requirement in the channel data set, and the transceiver unit is further configured to send fourth information, where the fourth information indicates a data amount, and the data amount is an amount of the data that meets the data quality requirement in the channel data set; and the transceiver unit is further configured to: receive the first message, where the first message is used to request the training data set; and send the training data set.

With reference to the third aspect, in some implementations of the third aspect, the first message includes the second information and/or the third information, the second information indicates the dimension arrangement manner of the training data set, and the third information indicates to filter the channel data obtained through screening.

According to a fourth aspect, a communication apparatus is provided. In a design, the apparatus may include modules that are in one-to-one correspondence with the method/operations/steps/actions described in the first aspect. The modules may be hardware circuits or software, or may be implemented by a combination of the hardware circuits and the software. In a design, the apparatus includes: a transceiver unit, configured to send first information, where the first information indicates a data quality screening policy, and the data quality screening policy is used to obtain, through screening, model training data that meets a data quality requirement; and the transceiver unit is further configured to receive a training data set from a first apparatus, where the training data set includes channel data that meets the data quality requirement; and a processing unit, configured to train an intelligent model by using the training data set.

The data quality screening policy is the same as that in the second aspect, and details are not described herein again.

With reference to the fourth aspect, in some implementations of the fourth aspect, the first information is included in a first message, and the first message is used to request the training data set of the intelligent model.

With reference to the fourth aspect, in some implementations of the fourth aspect, the first message further includes second information, the second information indicates a dimension arrangement manner of the training data set, and the arrangement manner of channel data in the training data set is the dimension arrangement manner.

With reference to the fourth aspect, in some implementations of the fourth aspect, the first message further includes third information, and the third information indicates to filter channel data obtained through screening.

With reference to the fourth aspect, in some implementations of the fourth aspect, the first information is included in a second message, the second message is used to request to evaluate channel data that meets the data quality requirement in the channel data set, and the transceiver unit is further configured to: receive fourth information from the first apparatus, where the fourth information indicates a data amount, and the data amount is an amount of the data that meets the data quality requirement in the channel data set; and send the first message to the first apparatus, where the first message is used to request the training data set.

With reference to the fourth aspect, in some implementations of the fourth aspect, the first message includes the second information and/or the third information, the second information indicates the dimension arrangement manner of the training data set, and the third information indicates to filter the channel data obtained through screening.

According to a fifth aspect, a communication apparatus is provided, including a processor. The processor may implement the method in any one of the first aspect and the possible implementations of the first aspect, or the method in any one of the second aspect and the possible implementations of the second aspect. Optionally, the communication apparatus further includes a memory. The processor is coupled to the memory, and may be configured to execute instructions in the memory, to implement the method in any one of the first aspect and the possible implementations of the first aspect, or the method in any one of the second aspect and the possible implementations of the second aspect. Optionally, the communication apparatus further includes a communication interface, and the processor is coupled to the communication interface.

In an implementation, the communication apparatus is a communication device. The communication interface may be a transceiver or an input/output interface.

In another implementation, the communication apparatus is a chip configured in a communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, including an input circuit, an output circuit, and a processing circuit. The processing circuit is configured to: receive a signal by using the input circuit, and transmit the signal by using the output circuit, to enable the processor to perform the method in any one of the first aspect and the possible implementations of the first aspect, or perform the method in any one of the second aspect and the possible implementations of the second aspect.

During specific implementation, the processor may be one or more chips, the input circuit may be an input pin, the output circuit may be an output pin, and the processing circuit may be a transistor, a gate circuit, a trigger, various logic circuits, or the like. An input signal received by the input circuit may be, for example, but not limited to, received and input by a receiver, and a signal output by the output circuit may be, for example, but not limited to, output to a transmitter and transmitted by the transmitter. The input circuit and the output circuit may be a same circuit, and the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is enabled to perform the method in any one of the first aspect and the possible implementations of the first aspect, or perform the method in any one of the second aspect and the possible implementations of the second aspect.

According to an eighth aspect, a computer-readable storage medium is provided. The computer-readable storage medium stores a computer program (which may also be referred to as code or instructions). When the computer program is run on a computer, the computer is enabled to perform the method in any one of the first aspect and the possible implementations of the first aspect, or perform the method in any one of the second aspect and the possible implementations of the second aspect.

According to a ninth aspect, a communication system is provided, including the communication apparatus provided in the third aspect and the communication apparatus provided in the fourth aspect.

**BRIEF DESCRIPTION OF DRAWINGS**

FIG. 1 is a schematic of a communication system according to an embodiment of this application;
FIG. 2 is a schematic flowchart of a data processing method according to an embodiment of this application;
FIG. 3 is another schematic flowchart of a data processing method according to an embodiment of this application;
FIG. 4 is another schematic flowchart of a data processing method according to an embodiment of this application;
FIG. 5 is a block diagram of an example of a communication apparatus according to an embodiment of this application; and
FIG. 6 is a diagram of a structure of an example of a communication device according to an embodiment of this application.

**DESCRIPTION OF EMBODIMENTS**

The following describes technical solutions of this application with reference to accompanying drawings.

In this application, "at least one (item)" may alternatively be described as "one (item) or more (items)", and "a plurality of (items)" may be two (items), three (items), four (items), or more (items). This is not limited. "/" may indicate an "or" relationship between associated objects, for example, A/B may indicate A or B; and "and/or" may indicate that three relationships exist between the associated objects, for example, A and/or B may indicate the following three cases: A exists alone, both A and B exist, and B exists alone, where A and B may be singular or plural. To facilitate description of the technical solutions of this application, a word such as "first", "second", "A", or "B" may be used to distinguish between technical features with a same or similar function. The word such as "first", "second", "A", or "B" does not limit a quantity and an execution sequence. In addition, the word such as "first", "second", "A", or "B" does not indicate a definite difference. A word such as "example" or "for example" is used to indicate an example, an illustration, or a description, and any design solution described as "example" or "for example" should not be construed as being more preferred or having more advantages than another design solution. The word such as "example" or "for example" is used to present a related concept in a specific manner for ease of understanding.

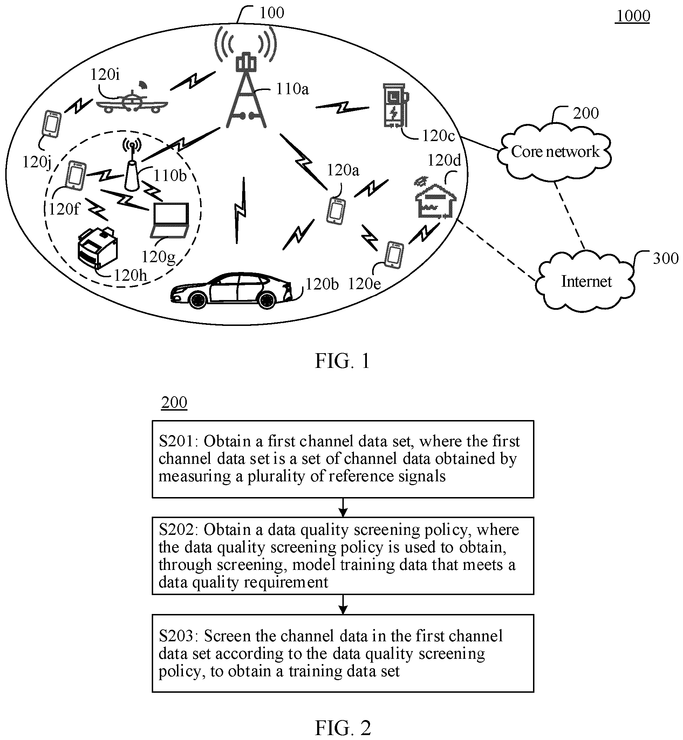

FIG. 1 is a schematic of an architecture of a communication system 1000 to which this application can be applied. As shown in FIG. 1, the communication system includes a radio access network (radio access network, RAN) 100 and a core network (core network, CN) 200. Optionally, the communication system 1000 may further include an Internet 300. The radio access network 100 may include at least one access network node (for example, 110a and 110b in FIG. 1), and may further include at least one terminal (for example, 120a to 120j in FIG. 1). The terminal is connected to the access network node in a wireless manner. The access network node is connected to the core network in a wireless or wired manner. A core network device and the access network node may be independent different physical devices, or may be a same physical device that integrates a function of the core network device and a function of the access network node; or there may be another possible case. For example, the function of the access network node and a part of functions of the core network device may be integrated into one physical device, and another physical device implements a remaining part of functions of the core network device. Physical existence forms of the core network device and the access network node are not limited in this application. Terminals may be connected to each other in the wired or wireless manner. Access network nodes may be connected to each other in the wired or wireless manner. FIG. 1 is only a schematic. The communication system may further include another network device, for example, may further include a wireless relay device and a wireless backhaul device.

The access network node may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network node in an open radio access network (open radio access network, O-RAN or open RAN), a next generation NodeB in a 6th generation (6th generation, 6G) mobile communication system, a base station in a future mobile communication system, an access node in a wireless fidelity (wireless fidelity, Wi-Fi) system, or the like. Alternatively, the access network node may be a module or a unit that implements a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network node may be a macro base station (for example, 110a in FIG. 1), or may be a micro base station or an indoor station (for example, 110b in FIG. 1), or may be a relay node, a donor node, or the like. A specific technology and a specific device form used by the access network node are not limited in this application. The 5G system may also be referred to as a new radio (new radio, NR) system.

In this application, an apparatus configured to implement the function of the access network node may be the access network node; or may be an apparatus that can support the access network node in implementing the function, for example, a chip system, a hardware circuit, a software module, or a combination of the hardware circuit and the software module. The apparatus may be installed in the access network node or may be used in matching with the access network node. In this application, the chip system may include a chip, or may include a chip and another discrete component. For ease of description, the following describes the technical solutions provided in this application by using an example in which the apparatus configured to implement the function of the access network node is the access network node, and the access network node is the base station.

The terminal may also be referred to as a terminal device, user equipment (user equipment, UE), a mobile station, a mobile terminal, or the like. The terminal may be widely used in various scenarios for communication. The scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, telemedicine, a smart grid, smart furniture, a smart office, a smart wearable, smart transportation, a smart city, or the like. The terminal may be a mobile phone, a tablet computer, a computer with a wireless transceiver function, a wearable device, a vehicle, a drone, a helicopter, an airplane, a ship, a robot, a robotic arm, a smart home device, or the like. A specific technology and a specific device form used by the terminal are not limited in this application.

In this application, an apparatus configured to implement a function of the terminal may be a terminal; or may be an apparatus that can support the terminal in implementing the function, for example, a chip system, a hardware circuit, a software module, or a combination of the hardware circuit and the software module. The apparatus may be installed in the terminal or may be used in matching with the terminal. For ease of description, the following describes the technical solutions provided in this application by using an example in which the apparatus configured to implement the function of the terminal is the terminal, and optionally, an example in which the terminal is the UE.

The base station and/or the terminal may be fixed or movable. The base station and/or the terminal may be deployed on land, including indoor or outdoor, handheld or in-vehicle; may be deployed on water; or may be deployed on an airplane, a balloon, or an artificial satellite in the air. An environment/scenario in which the base station and the terminal are located is not limited in this application. The base station and the terminal may be deployed in a same environment/scenario or different environments/scenarios. For example, the base station and the terminal are both deployed on land; or the base station is deployed on land, and the terminal is deployed on water. Examples are not provided one by one.

The following describes definitions in embodiments of this application.

1. Artificial intelligence

Artificial intelligence AI enables machines to learn and accumulate experience, so that the machines can resolve problems such as natural language understanding, image recognition, and chess playing that are resolved by humans through experience.

2. Machine learning

Machine learning is an implementation of artificial intelligence, and is a method that provides learning capabilities for machines to complete functions that cannot be implemented by direct programming. In practice, machine learning is a method of training a model by using data, and then using the model to predict a result. Reinforcement learning is a field of machine learning that emphasizes how to act based on the environment to maximize expected benefits. Transfer learning is another field of machine learning. Transfer learning focuses on storing solution models of existing problems and leveraging the solution models on other different but related problems.

3. Training (training) or learning

Training is a processing process in which parameters, such as weighted values, in an AI model or ML model are optimized to enable the model to perform a specific task. Embodiments of this application are applicable to but are not limited to one or more of the following training methods: supervised learning, unsupervised learning, reinforcement learning, transfer learning, and the like. Supervised learning uses a group of training samples that have been correctly labeled for training (where the training samples that have been correctly labeled means that each sample has an expected output value). Unlike supervised learning, unsupervised learning is a method that automatically classifies or groups input data without giving a pre-marked training sample.

4. Inference (inference)

Inference means using a trained AI model or ML model to execute a task, and inputting actual data into the AI model or ML model for processing to obtain a corresponding prediction result. The prediction result may also be referred to as an inference result or a decision result.

In this application, an independent network element (for example, referred to as an AI network element, an AI node, or an AI device) may be introduced into the communication system shown in FIG. 1 to implement an AI-related operation. The AI network element may be directly connected to the base station, or may be indirectly connected to the base station via a third-party network element. Optionally, the third-party network element may be a core network element such as an AMF network element or a UPF network element. Alternatively, an AI entity (or may be referred to as an AI module or another name) may be configured in another network element in the communication system to implement an AI-related operation. Optionally, the another network element may be a third-party independent network element in the base station, the core network device, a network management system (operation, administration and maintenance, OAM), a network data analysis center (network data analysis function, NWDAF), or an open radio access network (open radio access network, O-RAN, open RAN, or ORAN) or the like. In this case, the network element that performs the AI-related operation is a network element having a built-in AI function. Because both the AI network element and the AI entity implement an AI-related function, for ease of description, the AI network element and the network element having the built-in AI function are collectively referred to as AI units in the following descriptions. The OAM is configured to operate, manage, and/or maintain the core network device (a network management system of the core network device), and/or is configured to operate, manage, and/or maintain an access network device (a network management system of the access network device).

Optionally, to match and support the AI, the AI entity may be integrated into the terminal or a terminal chip.

Optionally, in this application, the AI entity may also be referred to as another name, for example, the AI module or the AI unit, and is mainly configured to implement an AI function (or referred to as the AI-related operation). A specific name of the AI entity is not limited in this application.

In this application, the AI model is a specific method for implementing the AI function. The AI model represents a mapping relationship between an input and an output of the model. The AI model may be a neural network or another machine learning model. The AI model may be referred to as the model for short. The AI-related operation may include at least one of the following: data collection, model training, model information release, model deduction (or referred to as model inference, inference, prediction, or the like), inference result release, or the like.

A network architecture and a service scenario that are described in this application are intended to describe the technical solutions in this application more clearly, but do not constitute a limitation on the technical solutions provided in this application. A person of ordinary skill in the art may know that with evolution of the network architecture and emergence of a new service scenario, the technical solutions provided in this application are also applicable to similar technical problems.

For a problem of a deviation existing in performance of actually measured channel data caused by impact of noise of an internal component of a communication apparatus, a calibration error of the communication system, and the like, this application proposes that when the communication system needs to perform model training by using actually collected channel data as training data, the communication apparatus may screen out channel data having an error from a collected channel data set according to an obtained data quality screening policy, for example, screen out channel data that cannot truly reflect a channel state due to a channel data error caused by noise of a component of the communication apparatus for measuring the channel data, time and/or frequency asynchronization of a reference signal transceiver apparatus, and the like. In this way, channel data that can be obtained through screening by a first apparatus according to the data quality screening policy can meet a quality requirement, so that an intelligent model trained based on a training data set obtained through screening can meet a performance requirement, to be used in communication to improve communication quality.

The following describes a data processing method provided in embodiments of this application with reference to the accompanying drawings.

FIG. 2 is a schematic flowchart of a data processing method 200 according to an embodiment of this application. The following uses an example in which a first apparatus performs the method for description. The first apparatus may be an access network node or an apparatus disposed in an access network node (for example, a chip disposed in the access network node). For example, the access network node may be a base station. Alternatively, the first apparatus may be a terminal or an apparatus disposed in a terminal (for example, a chip disposed in the terminal). However, this application is not limited thereto.

S201: The first apparatus obtains a channel data set, where the channel data set is a set of channel data obtained by measuring a plurality of reference signals.

In an implementation, that the first apparatus obtains a channel data set includes: The first apparatus sends the plurality of reference signals to a second apparatus, and the first apparatus receives the channel data set from the second apparatus.

The first apparatus may send the plurality of reference signals to the second apparatus, and the second apparatus receives the plurality of reference signals from the first apparatus, and measures each of the plurality of reference signals to obtain a plurality of pieces of channel data. The second apparatus sends the channel data set including the plurality of pieces of channel data to the first apparatus. Correspondingly, the first apparatus receives the channel data set from the second apparatus.

For example, the first apparatus may be an access network node, and the second apparatus may be a terminal. The access network node may send the plurality of reference signals to the terminal, and obtain, from the terminal, the channel data set obtained by measuring the plurality of reference signals by the terminal. Alternatively, the first apparatus is a terminal, and the second apparatus is an access network node. The terminal may send the plurality of reference signals to the access network node, and obtain, from the access network node, the channel data set obtained by measuring the plurality of reference signals by the access network node.

In another implementation, that the first apparatus obtains a channel data set includes: The first apparatus receives the plurality of reference signals from a second apparatus, and measures the plurality of reference signals to obtain the channel data set.

The second apparatus sends the plurality of reference signals to the first apparatus, and the first apparatus measures each of the plurality of reference signals from the second apparatus to obtain the channel data set.

For example, the first apparatus may be an access network node, and the second apparatus may be a terminal. The access network node may receive the plurality of reference signals from the terminal, and measure the plurality of reference signals to obtain the channel data set. Alternatively, the first apparatus may be a terminal, and the second apparatus may be an access network node. The terminal receives the plurality of reference signals from the access network node, and measures the plurality of reference signals to obtain the channel data set. This is not limited in this application.

S202: The first apparatus obtains a data quality screening policy, where the data quality screening policy is used to obtain, through screening, model training data that meets a data quality requirement.

In an implementation, that the first apparatus obtains a data quality screening policy includes: The first apparatus receives the data quality screening policy from a third apparatus.

The third apparatus may be an apparatus performing intelligent model training. The third apparatus may determine the data quality screening policy based on the data quality requirement of the model training. The third apparatus may send first information to the first apparatus, where the first information indicates the data quality screening policy.

For example, the first apparatus may be an access network node, and the third apparatus may be a network node configured with an AI entity in a network. For example, the third apparatus may be a core network node, an NWDAF, OAM, or another node in the network.

For another example, the first apparatus may be a terminal, and the third apparatus may be a network node configured with an AI entity in a network. For example, the third apparatus may be an access network node, a core network node, or another node in the network. The third apparatus may send the first information to the terminal, to notify the terminal of the data quality screening policy.

In another implementation, that the first apparatus obtains a data quality screening policy includes: The data quality screening policy is preconfigured for the first apparatus, and the first apparatus obtains the data quality screening policy from preconfigured information.

After obtaining the channel data set, the first apparatus may screen channel data in the channel data set according to the preconfigured data quality screening policy.

Optionally, the data quality screening policy includes but is not limited to one or more of the following (1) to (5):

(1) a screening policy based on received power stability of a same reference signal;
(2) a screening policy based on transmission delay stability of a reference signal;
(3) a screening policy based on phase stability of different channel data components corresponding to a same transceiver antenna pair;
(4) a screening policy based on a received signal-to-noise ratio of a reference signal; and
(5) a screening policy based on channel type diversity.

The first apparatus may screen out channel data having an error from the channel data set according to the data quality screening policy, for example, channel data that cannot truly reflect a channel state due to a channel data error caused by noise of a component of a communication apparatus (for example, the first apparatus or the second apparatus) for measuring the channel data, time and/or frequency asynchronization of a reference signal transceiver apparatus, and the like. In this way, channel data obtained through screening by the first apparatus according to the data quality screening policy can meet the quality requirement, so that an intelligent model trained based on a training data set obtained through screening can meet a performance requirement, to be used in communication to improve communication quality.

In this embodiment of this application, a reference signal sending apparatus may send the reference signals via T transmit antennas at a same moment, and a reference signal receiving apparatus receives, via R receive antennas, the reference signal sent by each of the T transmit antennas, where T and R are positive integers. The receiving apparatus may measure the reference signals received by the R receive antennas, to obtain one piece of channel data through measurement. The one piece of channel data includes a plurality of channel data components. For example, for one piece of channel data H that does not include multipath components, the channel data H may include $R \times T$ channel data components. This is represented as:

$$H = \begin{bmatrix} h_{1,1} & h_{1,2} & ... & h_{1,T} \\ h_{2,1} & h_{2,2} & ... & h_{2,T} \\ \vdots & \vdots & \ddots & \vdots \\ h_{R,1} & h_{R,1} & ... & h_{R,T} \end{bmatrix}$$

$h_{r,t}$ is one channel data component, and represents a state of a channel between a transmit antenna t and a receive antenna r. The transmit antenna t and the receive antenna r corresponding to $h_{r,t}$ may be referred to as one transceiver antenna pair, where r is a positive integer less than or equal to R, and t is a positive integer less than or equal to T.

The following separately describes the foregoing screening policies (1) to (5) and gives examples for the screening policies. However, this application is not limited thereto. It should be understood that, in specific implementation, a part or all of the screening policies may be selected as the data quality screening policy based on a requirement, or the data quality screening policy may further include another screening policy.

(1) Screening policy based on received power stability of a same reference signal

The screening policy based on received power stability of a same reference signal includes: A difference value between received powers of receiving a same reference signal by different receive antennas corresponding to one piece of channel data meets a received power stability requirement, and in this case, channel data obtained based on the reference signal may be used as the model training data. In other words, one reference signal sent by one transmit antenna is received by a plurality of receive antennas. A difference value between received powers of receiving the reference signal by different receive antennas in the plurality of receive antennas meets the stability requirement, and in this case, channel data obtained based on the reference signal may be used as the model training data. If the data quality screening policy further includes a policy other than the policy (1), the first apparatus further needs to determine whether a requirement of the another screening policy is met, to determine whether to select the channel data obtained based on the reference signal as the model training data.

The data quality requirement includes the received power stability requirement. The received power stability requirement may include but is not limited to that the difference value between the received powers of receiving the same reference signal by the different receive antennas is less than or equal to a first threshold. For example, the first threshold may be referred to as a power stability threshold, and is denoted as $\text{Power}_{TH}$.

In an implementation, in the policy based on received power stability of a same reference signal, the different receive antennas are specifically two receive antennas that have adjacent spatial locations and a same polarization direction. In other words, the policy may be specifically that a difference value between received powers of receiving a same reference signal by the two receive antennas that have the adjacent spatial locations and the same polarization direction meets the received power stability requirement.

In another implementation, the policy (1) may be specifically that a difference value between received powers of receiving a same reference signal by every two different receive antennas corresponding to one piece of channel data meets the received power stability requirement.

(2) Screening policy based on transmission delay stability of a reference signal

The screening policy based on delay stability of a channel data component in one piece of channel data includes: A difference value between transmission delays of reference signals of different transceiver antenna pairs corresponding to one piece of channel data meets a delay stability requirement, and in this case, the channel data may be used as the model training data, where a same transceiver antenna pair includes one transmit antenna and one receive antenna of one reference signal. If the data quality screening policy further includes a policy other than the policy (2), the first apparatus further needs to determine whether the channel data meets a requirement of the another screening policy, to determine whether to select the channel data as the model training data.

The data quality requirement includes the delay stability requirement. The delay stability requirement may include but is not limited to that the difference value between the transmission delays of the reference signals of the different transceiver antenna pairs is less than or equal to a second threshold. For example, the second threshold may be referred to as a delay stability threshold, and is denoted as $\Delta T_{TH}$.

For example, the first apparatus may obtain a channel delay power spectrum of each transceiver antenna pair corresponding to one piece of channel data. The channel delay power spectrum is a correspondence between a transmission delay generated due to multipath transmission and an expectation of a receive signal power. The first apparatus may calculate a delay difference value between delays corresponding to peak values of channel delay power spectra of every two transceiver antenna pairs. If a difference value between transmission delays of reference signals of any two transceiver antenna pairs in the channel data is less than or equal to the second threshold, the channel data meets the delay stability requirement, and may be used as the model training data.

(3) Screening policy based on phase stability of channel data components corresponding to a same transceiver antenna pair

The screening policy based on phase stability of channel data components corresponding to a same transceiver antenna pair includes: Phases of channel data components of a same transceiver antenna pair in a plurality of pieces of channel data obtained within a preset interval meets a phase stability requirement, and in this case, the channel data obtained within the preset interval may be used as the model training data.

The data quality requirement includes the phase stability requirement. The phase stability requirement may include but is not limited to that a phase difference between peak values of channel impulse responses obtained by a same antenna pair based on different reference signals is less than or equal to a third threshold. For example, the third threshold may be referred to as a phase stability threshold, and is denoted as $\theta_{TH}$.

For example, the preset time interval may be one or more time frames, one or more subframes, or one or more slots. The first apparatus obtains a plurality of pieces of channel data obtained within one preset time interval. If a phase difference between peak values of channel impulse responses corresponding to a same transceiver antenna pair in the plurality of pieces of channel data is less than or equal to the third threshold, the first apparatus may use the plurality of pieces of channel data as the model training data. If the data quality screening policy further includes another policy, the first apparatus further needs to determine whether the plurality of pieces of channel data meet a requirement of the another policy, to determine whether to select the plurality of pieces of channel data as the training data.

Optionally, one or more of the foregoing policies (1) to (3) may be specifically used as a screening policy of first channel data, to obtain, through screening, first channel data that meets the quality requirement in the channel data set. The first channel data includes a channel data component of a line of sight (line of sight, LOS) transmission path.

(4) Screening policy based on a received signal-to-noise ratio of a reference signal

The screening policy based on a received signal-to-noise ratio of a reference signal includes: The received signal-to-noise ratio of the reference signal is greater than or equal to a fourth threshold, and in this case, channel data obtained based on the reference signal may be used as the model training data. For example, the fourth threshold may be referred to as a signal-to-noise ratio threshold, and is denoted as $SNR_{TH}$.

(5) Screening policy based on channel type diversity

The screening policy based on channel type diversity may include but is not limited to one or more of the following a to c:

a. N pieces of first channel data and M pieces of second channel data are selected to form the training data set. The second channel data does not include a channel data component of the LOS transmission path. In other words, the second channel data includes only a channel data component of a non-line-of-sight (non-line-of-sight, NLOS) transmission path. N and M are positive integers.
b. A ratio of the LOS channel data to the NLOS channel data in the training data set is a preset ratio.
c. Q pieces of channel data are selected to form the training data set, where the Q pieces of channel data include at least the N pieces of first channel data and include at least the M pieces of second channel data, and Q>N+M.

Optionally, the foregoing thresholds (such as the first threshold, the second threshold, the third threshold, and the fourth threshold) may be predefined, or may be obtained by the first apparatus from another apparatus.
For example, the first apparatus may be a terminal, and the terminal may obtain one or more of the foregoing thresholds from a network node in the network. Alternatively, one or more of the foregoing thresholds may be preconfigured in the terminal.
For another example, the first apparatus may be an access network node, and the access network node may obtain one or more of the foregoing thresholds from another network node. Alternatively, one or more of the foregoing thresholds may be preconfigured in the access network node.
S203: The first apparatus screens the channel data in the channel data set according to the data quality screening policy, to obtain the training data set.
The first apparatus obtains, from the channel data set according to the data quality screening policy, channel data that meets the quality requirement as the training data set.
In an implementation, the first apparatus trains an intelligent model by using the training data set. The training data set may be used as sample data to train the intelligent model, or the training data set may be used as a sample label in a model training process or for another purpose. This is not limited in this application.
In another implementation, the first apparatus sends the training data set.
For example, the first apparatus sends the training data set to the network node including the AI entity in the network. After receiving the training data set, the network node trains an intelligent model based on the training data set. Optionally, the network node may send the first information to the first apparatus, to notify the first apparatus of the data quality screening policy. After obtaining, according to the data quality screening policy, the training data set that meets the data quality requirement of the network node, the first apparatus sends the training data set to the network node. The network node trains the intelligent model based on the training data set.
Optionally, the first apparatus screens the channel data in the channel data set according to the data quality screening policy, to obtain a plurality of pieces of channel data, and arranges the plurality of pieces of channel data based on a tensor dimension definition, to obtain the training data set.
By way of example, and not limitation, the tensor dimension definition may define one or more of the following dimensions:
a quantity of transmit antennas, a quantity of receive antennas, and a quantity of time intervals or a quantity of subcarriers.
Optionally, the first apparatus screens the channel data in the channel data set according to the data quality screening policy, to obtain the plurality of pieces of channel data, and filters the plurality of pieces of channel data to obtain the training data set. The training data set includes data obtained by filtering the plurality of pieces of channel data.
For example, the first apparatus may convert the plurality of pieces of channel data (namely, frequency channel responses) obtained through screening into time domain data, and filter the time domain data. Noise is reduced through time domain filtering. Then, filtered time domain data is converted into frequency domain data, to obtain the training data set. However, this application is not limited thereto. The first apparatus may perform frequency domain filtering on the plurality of pieces of channel data obtained through screening.

In an example, the network node including the AI entity may send the first information to the first apparatus, and notify, by using the first information, the first apparatus to provide the training data set for training the intelligent model. The first information includes the data quality screening policy, so that the first apparatus may obtain, through screening according to the data screening policy, a channel data set that meets a requirement of the network node as the training data set. The first information may further include an address of the first apparatus, so that the first information may be transmitted to the first apparatus through a plurality of nodes in the network. The first information may further include a data amount of training data and data processing parameters that are needed by the network node. For example, the data processing parameters may include a tensor dimension definition of the training data and a parameter of a filter. The first information may include one or more pieces of information shown in Table 1.

Table 1

| Address of the first apparatus | Needed data amount | Data quality screening policies and the following parameters corresponding to the policies: <br> (1) Power stability threshold $Power_{TH}$ <br> (2) Phase stability threshold $\theta_{TH}$ <br> (3) Delay stability threshold, denoted as $\Delta T_{TH}$ <br> (4) Phase stability threshold, denoted as $\theta_{TH}$ <br> (5) Preset time T for determining the phase stability | Data processing parameters: <br> (1) Tensor dimension definition of the training data <br> (2) Parameter of the filter |
|---|---|---|---|

After obtaining, based on the first information, the channel data that meets the data quality requirement of the network node, the first apparatus performs, based on the data processing parameters, data processing on the channel data obtained through screening, to obtain the training data set, and then sends the training data set to the network node. The network node trains the intelligent model based on the training data set.

According to the solutions provided in this embodiment of this application, the first apparatus may obtain, through screening according to the data quality screening policy, the channel data that meets the data quality requirement from the channel data set obtained through measurement, and eliminate the channel data that cannot truly reflect the channel state due to the channel data error caused by the noise of the component of the communication apparatus (for example, the first apparatus or the second apparatus) for measuring the channel data, the time and/or frequency asynchronization of the reference signal transceiver apparatus, and the like. In this way, the intelligent model obtained through training based on the screened training data set can meet the performance requirement, so that the intelligent model is used in wireless communication to improve the communication quality.

It should be noted that, in embodiments disclosed in this application, unless otherwise specified or there is a logic conflict, terms and/or descriptions in different examples are consistent and may be mutually referenced, and technical features in different examples may be combined, based on an internal logical relationship thereof, to form a new example.

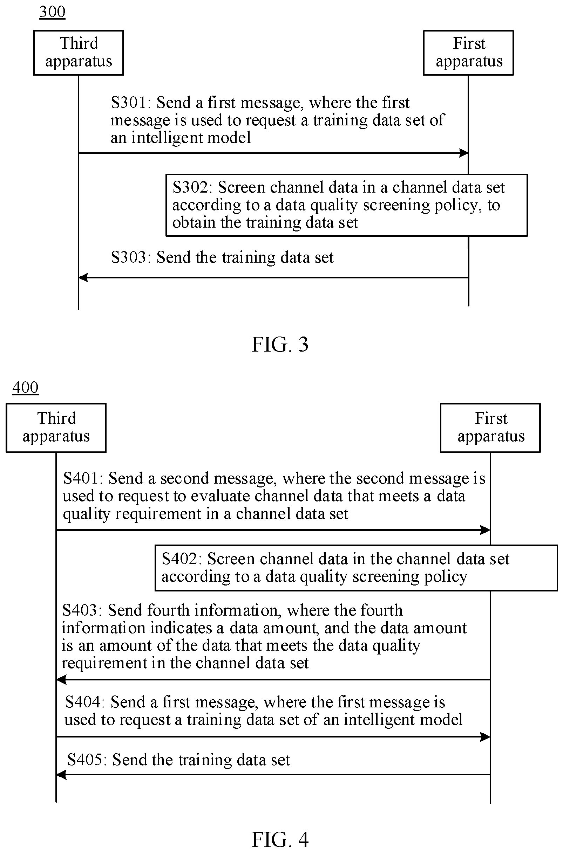

FIG. 3 is a diagram of a data processing method 300 according to an embodiment of this application. In the embodiment shown in FIG. 3, a first apparatus may be an access network node, and a third apparatus may be a network node configured with an AI entity in a network. For example, the third apparatus may be a core network node, an NWDAF, OAM, or another node in the network. Alternatively, the first apparatus may be an access network node, and the third apparatus may be an access network node or the foregoing network node. However, this application is not limited thereto.

S301: The third apparatus sends a first message to the first apparatus, to request a training data set of an intelligent model.

Correspondingly, the first apparatus receives the first message from the third apparatus.

Optionally, the first message includes first information, where the first information indicates a data quality screening policy.

The third apparatus may determine a quality requirement of training data based on a training requirement, and notify the first apparatus of the quality requirement by using the first message, so that the first apparatus can provide, for the third apparatus, a training data set that meets the quality requirement.

The first message may further include one or more types of information shown in Table 1.

Optionally, the first message includes second information, where the second information indicates a dimension arrangement manner of the training data set.

Optionally, the first message includes third information, where the third information indicates to filter channel data obtained through screening. S302: The first apparatus screens channel data in a data set according to the data quality screening policy, to obtain a channel data set.

The first apparatus screens the channel data in the channel data set in response to that the third apparatus requests the training data set of the intelligent model, to obtain the training data set. The data quality screening policy may be preconfigured in the first apparatus, or the first message includes the data quality screening policy. The channel data set may be obtained by measuring a reference signal by the first apparatus, or may be obtained by the first apparatus from a second apparatus. However, this application is not limited thereto.

If the first message further includes the second information, the first apparatus may arrange channel data in the training data set based on the dimension arrangement manner indicated by the second information. In addition, if the first message further includes the third information, the first apparatus filters, based on the third information, the channel data that meets the data quality requirement, to obtain the training data set.

S303: The first apparatus sends the training data set to the third apparatus.

Correspondingly, the third apparatus receives the training data set from the first apparatus.

After receiving the training data set that meets the data quality requirement, the third apparatus trains the intelligent model by using the training data set.

According to the solutions provided in this embodiment of this application, an intelligent model obtained through training based on a screened training data set can meet a performance requirement, so that the intelligent model is used in wireless communication to improve communication quality.

FIG. 4 is a diagram of a data processing method 400 according to an embodiment of this application.

S401: A third apparatus sends a second message to a first apparatus, where the second message is used to request to evaluate channel data that meets a data quality requirement in a channel data set.

Correspondingly, the first apparatus receives the second message from the third apparatus. The second message may include first information, where the first information indicates a data quality screening policy. The third apparatus may determine the quality requirement of training data based on a training requirement, and notify the first apparatus of the quality requirement by using the second message, so that the first apparatus evaluates the channel data that meets the quality requirement.

S402: The first apparatus screens channel data in the channel data set according to the data quality screening policy.

The first apparatus screens the channel data in the channel data set according to the data quality screening policy, and determines the channel data that meets the data quality requirement in the channel data set. The channel data set may be obtained by measuring a reference signal by the first apparatus, or may be obtained by the first apparatus from a second apparatus. However, this application is not limited thereto.

S403: The first apparatus sends fourth information to the third apparatus, where the fourth information indicates a data amount, and the data amount is an amount of the data that meets the data quality requirement in the channel data set.

Correspondingly, the third apparatus receives the fourth information from the first apparatus.

After determining, according to the data quality screening policy, the channel data that meets the data quality requirement in the channel data set, the first apparatus sends the fourth information to the third apparatus, to notify the third apparatus of the data amount of the channel data that meets the data quality requirement in the channel data set.

S404: The third apparatus sends a first message to the first apparatus, to request a training data set of an intelligent model.

Correspondingly, the first apparatus receives the first message from the third apparatus. The third apparatus may determine, based on the data amount indicated by the fourth information, whether the data amount meets a requirement for training the intelligent model. When the data amount requirement is met, the third apparatus may send the first message to the first apparatus, to request the channel data that meets the data quality requirement as the training data set.

Optionally, the first message may include the foregoing second information and/or third information.

S405: The first apparatus sends the training data set to the third apparatus.

Correspondingly, the third apparatus receives the training data set from the first apparatus.

The first apparatus determines the training data set in response to the first message, where the training data set includes the channel data that meets the data quality requirement. If the first message further includes the second information, the first apparatus may arrange the channel data in the training data set based on a dimension arrangement manner indicated by the second information. In addition, if the first message further includes the third information, the first apparatus filters, based on the third information, the channel data that meets the data quality requirement, to obtain the training data set.

According to the solutions provided in this embodiment of this application, an intelligent model obtained through training based on a screened training data set can meet a performance requirement, so that the intelligent model is used in wireless communication to improve communication quality.

In this application, the apparatus may perform a part or all steps or operations related to the apparatus. These steps or operations are merely examples. In this application, other operations or variations of various operations may be further performed. In addition, the steps may be performed in a sequence different from a sequence presented in this application, and not all the operations in this application may be necessarily to be performed.

In the examples of this application, unless otherwise specified or there is a logic conflict, terms and/or descriptions in different examples are consistent and may be mutually referenced, and technical features in different examples may be combined, based on an internal logical relationship thereof, to form a new example.

The methods provided in embodiments of this application are described above in detail with reference to FIG. 2 and FIG. 4. The following accompanying drawings describe a communication apparatus and a communication device provided in embodiments of this application. To implement functions in the methods provided in embodiments of this application, the network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

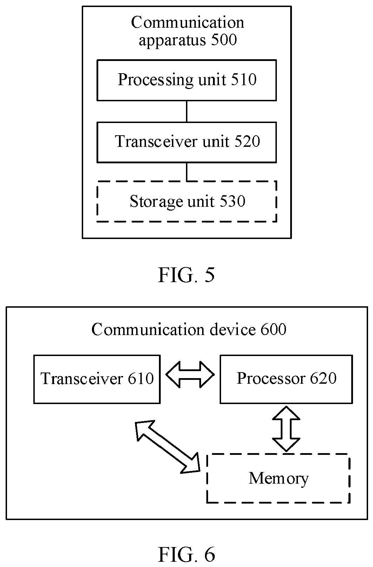

FIG. 5 is a block diagram of a communication apparatus according to an embodiment of this application. As shown in FIG. 5, a communication apparatus 500 may include a transceiver unit 520.

In a possible design, the communication apparatus 500 may correspond to the first apparatus in the foregoing method embodiments, the chip configured in (or used in) the first apparatus, or another apparatus, module, circuit, unit, or the like that can implement the methods of the first apparatus.

It should be understood that the communication apparatus 500 may include units configured to perform the methods performed by the first apparatus in the methods shown in FIG. 2, FIG. 3, and FIG. 4. In addition, the units in the communication apparatus 500 and the foregoing other operations and/or functions are respectively used to implement corresponding procedures of the methods shown in FIG. 2, FIG. 3, and FIG. 4.

Optionally, the communication apparatus 500 may further include a processing unit 510. The processing unit 510 may be configured to process instructions or data, to implement a corresponding operation.

It should be further understood that when the communication apparatus 500 is the chip configured in (or used in) the first apparatus, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data, and the processing unit 510 may execute the instructions or the data stored in the storage unit, to enable the communication apparatus to implement a corresponding operation.

It should be understood that the transceiver unit 520 in the communication apparatus 500 may be implemented by using a communication interface (for example, a transceiver or an input/output interface), for example, may correspond to a transceiver 610 in a communication device 600 shown in FIG. 6. The processing unit 510 in the communication apparatus 500 may be implemented by using at least one processor, for example, may correspond to a processor 620 in the communication device 600 shown in FIG. 6. The processing unit 510 in the communication apparatus 500 may be implemented by using at least one logic circuit. The storage unit 530 in the communication apparatus 500 may correspond to a memory in the communication device 600 shown in FIG. 6.

It should be further understood that a specific process in which each unit performs the foregoing corresponding steps has been described in detail in the foregoing method embodiments. For brevity, details are not described herein again.

In another possible design, the communication apparatus 500 may correspond to the third apparatus in the foregoing method embodiments, for example, the chip configured in (or used in) the third apparatus, or another apparatus, module, circuit, or unit that can implement the methods of the third apparatus.

It should be understood that the communication apparatus 500 may include units configured to perform the methods performed by the third apparatus in the methods shown in FIG. 2, FIG. 3, and FIG. 4. In addition, the units in the communication apparatus 500 and the foregoing other operations and/or functions are respectively used to implement corresponding procedures of the methods shown in FIG. 2, FIG. 3, and FIG. 4.

Optionally, the communication apparatus 500 may further include a processing unit 510. The processing unit 510 may be configured to process instructions or data, to implement a corresponding operation.

It should be further understood that when the communication apparatus 500 is the chip configured in (or used in) the third apparatus, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data, and the processing unit 510 may execute the instructions or the data stored in the storage unit, to enable the communication apparatus to implement a corresponding operation.

It should be understood that when the communication apparatus 500 is the third apparatus, the transceiver unit 520 in the communication apparatus 500 may be implemented by using a communication interface (for example, a transceiver or an input/output interface), for example, may correspond to a transceiver 610 in a communication device 600 shown in FIG. 6. The processing unit 510 in the communication apparatus 500 may be implemented by using at least one processor, for example, may correspond to a processor 620 in the communication device 600 shown in FIG. 6. The processing unit 510 in the communication apparatus 500 may be implemented by using at least one logic circuit. The storage unit 530 in the communication apparatus 500 may correspond to a memory in the communication device 600 shown in FIG. 6.

It should be further understood that a specific process in which each unit performs the foregoing corresponding steps has been described in detail in the foregoing method embodiments. For brevity, details are not described herein again.

FIG. 6 is a diagram of a structure of a communication device 600 according to an embodiment of this application. The communication device 600 may be used in the system shown in FIG. 1, to perform functions of the communication device in the foregoing method embodiments. As shown in the figure, the communication device 600 includes a processor 620 and a transceiver 610. Optionally, the communication device 600 further includes a memory. The processor 620, the transceiver 610, and the memory may communication with each other by using an internal connection path, to transfer a control signal and/or a data signal. The memory is configured to store a computer program, and the processor 620 is configured to execute the computer program in the memory, to control the transceiver 610 to receive and send a signal.

The processor 620 and the memory may be combined into a processing apparatus. The processor 620 is configured to execute program code stored in the memory to implement the foregoing functions. During specific implementation, the memory may alternatively be integrated into the processor 620, or may be independent of the processor 620. The processor 620 may correspond to the processing unit in FIG. 5.

The transceiver 610 may correspond to the transceiver unit in FIG. 5. The transceiver 610 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In an implementation, the communication device 600 shown in FIG. 6 can implement processes related to the first apparatus in the method embodiments shown in FIG. 2, FIG. 3, and FIG. 4. Operations and/or functions of modules in the communication device 600 are respectively used to implement corresponding procedures in the foregoing method embodiments. For details, refer to the descriptions in the foregoing method embodiments. To avoid repetition, detailed descriptions are properly omitted herein.

In another implementation, the communication device 600 shown in FIG. 6 can implement processes related to the third apparatus in the method embodiments shown in FIG. 2, FIG. 3, and FIG. 4. Operations and/or functions of modules in the communication device 600 are respectively used to implement corresponding procedures in the foregoing method embodiments. For details, refer to the descriptions in the foregoing method embodiments. To avoid repetition, detailed descriptions are properly omitted herein.

Optionally, the first apparatus may be an access network device, and the third apparatus may be a network node in a network, for example, a core network node, OAM, an NWDAF, or a third-party independent network element in an ORAN. Alternatively, the first apparatus may be a terminal device, and the third apparatus may be an access network device.

The processor 620 may be configured to perform an action implemented inside the communication device in the foregoing method embodiments, and the transceiver 610 may be configured to perform an action of sending from the communication device to the network device in the foregoing embodiments or an action of receiving from the network device in the foregoing method embodiments. For details, refer to the descriptions in the foregoing method embodiments. Details are not described herein again.

Optionally, the communication device 600 may further include a power supply, configured to supply power to various components or circuits in the communication device.

An embodiment of this application further provides a processing apparatus, including a processor and a (communication) interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

According to the methods provided in embodiments of this application, this application further provides a computer program product, where the computer program product includes computer program code, and when the computer program code is executed by one or more processors, an apparatus including the processor is enabled to perform the methods in embodiments shown in FIG. 2, FIG. 3, and FIG. 4.

All or some of the technical solutions in embodiments of this application may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, all or some of the procedures or functions according to embodiments of the present invention are generated. The foregoing computer instructions may be stored in a computer-readable storage medium, or may be transmitted from a computer-readable storage medium to another computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in embodiments of this application, this application further provides a computer-readable storage medium, where the computer-readable storage medium stores program code, and when the program code is run by one or more processors, an apparatus including the processor is enabled to perform the methods in embodiments shown in FIG. 2, FIG. 3, and FIG. 4.

According to the methods provided in embodiments of this application, this application further provides a system, including the foregoing one or more first apparatuses. The system may further include the foregoing one or more third apparatuses.

In the several embodiments provided in this application, it should be understood that the disclosed systems, apparatuses, and methods may be implemented in other manners. For example, the described apparatus embodiment is merely schematic. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located at one position, or may be distributed on a plurality of network units. A part or all of the units may be selected based on an actual requirement to achieve an objective of the solutions of embodiments.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:

   receiving or sending a plurality of reference signals;
   obtaining a first channel data set, wherein the first channel data set is a set of a plurality of pieces of channel data obtained based on the plurality of reference signals;
   obtaining a data quality screening policy, wherein the data quality screening policy is used to obtain, through screening, training data of an intelligent model that meets a data quality requirement; and
   screening the channel data in the first channel data set according to the data quality screening policy, to obtain a training data set.

2. The method according to claim 1, wherein the data quality screening policy comprises one or more of the following:

   a screening policy based on received power stability of a same reference signal;
   a screening policy based on transmission delay stability of a reference signal;
   a screening policy based on phase stability of a channel data component corresponding to a same transceiver antenna pair;
   a screening policy based on a received signal-to-noise ratio of a reference signal; or
   a screening policy based on channel type diversity.

3. The method according to claim 2, wherein the screening policy based on received power stability of a same reference signal comprises: selecting channel data that meets the following received power stability requirement as the training data, wherein

a difference value between received powers of receiving a same reference signal by different receive antennas corresponding to one piece of channel data is less than or equal to a first threshold.

4. The method according to claim 3, wherein the different receive antennas are two receive antennas that have adjacent spatial locations and a same polarization direction.

5. The method according to any one of claims 2 to 4, wherein the screening policy based on transmission delay stability of a reference signal comprises: selecting channel data that meets the following delay stability requirement as the training data, wherein

a difference value between transmission delays of reference signals of different transceiver antenna pairs corresponding to one piece of channel data is less than or equal to a second threshold, wherein the transceiver antenna pair comprises one transmit antenna corresponding to one channel data component and a receive antenna corresponding to the one channel data component.

6. The method according to any one of claims 2 to 5, wherein the screening policy based on phase stability of a channel data component corresponding to a same transceiver antenna pair comprises: selecting channel data that meets the following phase stability requirement as the training data, wherein

a phase difference value between channel data components of a same transceiver antenna pair in a plurality of pieces of channel data obtained within a preset interval is less than or equal to a third threshold, wherein the transceiver antenna pair comprises one transmit antenna corresponding to one channel data component and a receive antenna corresponding to the one channel data component.

7. The method according to any one of claims 2 to 6, wherein the screening policy based on a received signal-to-noise ratio of a reference signal comprises:
using channel data corresponding to a reference signal whose received signal-to-noise ratio is greater than or equal to a fourth threshold as the training data.

8. The method according to any one of claims 2 to 7, wherein the screening policy based on channel type diversity comprises one or more of the following:

N pieces of line of sight LOS channel data and M pieces of non-line-of-sight NLOS channel data are selected to form the training data set, wherein N and M are positive integers;
a ratio of the LOS channel data to the NLOS channel data in the training data set is a preset ratio; and
Q pieces of channel data are selected to form the training data set, wherein the Q pieces of channel data comprise at least the N pieces of LOS channel data and comprise at least the M pieces of NLOS channel data, and Q>N+M.

9. The method according to any one of claims 1 to 8, wherein

the sending a plurality of reference signals comprises: sending the plurality of reference signals to a second apparatus; and
the obtaining a first channel data set comprises: receiving the first channel data set from the second apparatus; or
the receiving a plurality of reference signals comprises: receiving the plurality of reference signals from a second apparatus; and
the obtaining a first channel data set comprises: measuring the plurality of reference signals to obtain the first channel data set.

10. The method according to any one of claims 1 to 9, wherein the method further comprises:
training the intelligent model by using the training data set.

11. The method according to any one of claims 1 to 10, wherein the obtaining a data quality screening policy comprises:
receiving first information, wherein the first information indicates the data quality screening policy.

12. The method according to any one of claims 1 to 11, wherein the first information is comprised in a first message, and the first message is used to request the training data set of the intelligent model; and the method further comprises:
sending the training data set.

13. The method according to claim 12, wherein the first message further comprises second information, and the second information indicates a dimension arrangement manner of the training data set; and
the screening the channel data in the first channel data set according to the data quality screening policy, to obtain a training data set comprises:

screening the first channel data set according to the data quality screening policy, to obtain a plurality of pieces of channel data; and
arranging the plurality of pieces of channel data in the dimension arrangement manner, to obtain the training data set.

14. The method according to claim 12 or 13, wherein the first message further comprises third information, and the third information indicates to filter the channel data obtained through screening; and
the screening the channel data in the first channel data set according to the data quality screening policy, to obtain a training data set comprises:

screening the first channel data set according to the data quality screening policy, to obtain the plurality of pieces of channel data; and
filtering the plurality of pieces of channel data to obtain the training data set, wherein the training data set comprises data obtained by filtering the plurality of pieces of channel data.

15. The method according to any one of claims 1 to 11, wherein the first information is comprised in a second message, and the second message is used to request to evaluate channel data that meets the data quality requirement in the channel data set; and the method further comprises:

sending fourth information, wherein the fourth information indicates a data amount, and the data amount is an amount of the data that meets the data quality requirement in the channel data set;
receiving a first message, wherein the first message is used to request the training data set; and
sending the training data set.

16. A data processing method, comprising:

sending first information, wherein the first information indicates a data quality screening policy, and the data quality screening policy is used to obtain, through screening, model training data that meets a data quality requirement;
receiving a training data set from a first apparatus, wherein the training data set comprises channel data that meets the data quality requirement; and
training an intelligent model by using the training data set.

17. The method according to claim 16, wherein the data quality screening policy comprises one or more of the following:

a screening policy based on received power stability of a same reference signal;
a screening policy based on transmission delay stability of a reference signal;
a screening policy based on phase stability of a channel data component corresponding to a same transceiver antenna pair;
a screening policy based on a received signal-to-noise ratio of a reference signal; and
a screening policy based on channel type diversity.

18. The method according to claim 17, wherein the screening policy based on received power stability of a same reference signal comprises: selecting channel data that meets the following received power stability requirement as the training data, wherein
a difference value between received powers of receiving a same reference signal by different receive antennas corresponding to one piece of channel data is less than or equal to a first threshold.

19. The method according to claim 18, wherein the different receive antennas are two receive antennas that have adjacent spatial locations and a same polarization direction.

20. The method according to any one of claims 17 to 19, wherein the screening policy based on transmission delay stability of a reference signal comprises: selecting channel data that meets the following delay stability requirement as the training data, wherein

a difference value between transmission delays of reference signals of different transceiver antenna pairs corresponding to one piece of channel data is less than or equal to a second threshold, wherein the transceiver antenna pair comprises one transmit antenna corresponding to one channel data component and a receive antenna corresponding to the one channel data component.

21. The method according to any one of claims 17 to 20, wherein the screening policy based on phase stability of a channel data component corresponding to a same transceiver antenna pair comprises: selecting channel data that meets the following phase stability requirement as the training data, wherein

a phase difference value between channel data components of a same transceiver antenna pair in a plurality of pieces of channel data obtained within a preset interval is less than or equal to a third threshold, wherein the transceiver antenna pair comprises one transmit antenna corresponding to one channel data component and a receive antenna corresponding to the one channel data component.

22. The method according to any one of claims 17 to 21, wherein the screening policy based on a received signal-to-noise ratio of a reference signal comprises:
using channel data corresponding to a reference signal whose received signal-to-noise ratio is greater than or equal to a fourth threshold as the training data.

23. The method according to any one of claims 17 to 22, wherein the screening policy based on channel type diversity comprises one or more of the following:

N pieces of line of sight LOS channel data and M pieces of non-line-of-sight NLOS channel data are selected to form the training data set, wherein N and M are positive integers;
a ratio of the LOS channel data to the NLOS channel data in the training data set is a preset ratio; and
Q pieces of channel data are selected to form the training data set, wherein the Q pieces of channel data comprise at least the N pieces of LOS channel data and comprise at least the M pieces of NLOS channel data, and Q>N+M.

24. The method according to any one of claims 17 to 23, wherein the first information is comprised in a first message, and the first message is used to request the training data set of the intelligent model.

25. The method according to claim 24, wherein the first message further comprises second information, the second information indicates a dimension arrangement manner of the training data set, and an arrangement manner of channel data in the training data set is the dimension arrangement manner.

26. The method according to claim 24 or 25, wherein the first message further comprises third information, and the third information indicates to filter channel data obtained through screening.

27. The method according to any one of claims 16 to 26, wherein the first information is comprised in a second message, and the second message is used to request to evaluate channel data that meets the data quality requirement in the channel data set; and the method further comprises:

receiving fourth information from the first apparatus, wherein the fourth information indicates a data amount, and the data amount is an amount of the data that meets the data quality requirement in the channel data set;
sending the first message to the first apparatus, wherein the first message is used to request the training data set; and
receiving the training data set from the first apparatus.

28. A communication apparatus, configured to: implement the method according to any one of claims 1 to 15, or implement the method according to any one of claims 16 to 27.

29. A communication apparatus, comprising a processor and a memory, wherein the memory is coupled to the processor, and the processor is configured to perform the method according to any one of claims 1 to 15 or the method according to any one of claims 16 to 27.

30. A computer-readable storage medium, storing instructions, wherein when the instructions are run on a computer, the computer is enabled to perform the method according to any one of claims 1 to 27.

31. A communication system, comprising an apparatus configured to implement the method according to any one of claims 1 to 15 and an apparatus configured to implement the method according to any one of claims 16 to 27.

FIG. 1

200

S201: Obtain a first channel data set, where the first channel data set is a set of channel data obtained by measuring a plurality of reference signals

S202: Obtain a data quality screening policy, where the data quality screening policy is used to obtain, through screening, model training data that meets a data quality requirement

S203: Screen the channel data in the first channel data set according to the data quality screening policy, to obtain a training data set

FIG. 2

300

```
┌───────────┐                                        ┌───────────┐
│   Third   │                                        │   First   │
│ apparatus │                                        │ apparatus │
└───────────┘                                        └───────────┘
```

S301: Send a first message, where the first
message is used to request a training data set of
an intelligent model

S302: Screen channel data in a channel data set
according to a data quality screening policy, to
obtain the training data set

S303: Send the training data set

FIG. 3

400

```
┌───────────┐                                        ┌───────────┐
│   Third   │                                        │   First   │
│ apparatus │                                        │ apparatus │
└───────────┘                                        └───────────┘
```

S401: Send a second message, where the second message is
used to request to evaluate channel data that meets a data
quality requirement in a channel data set

S402: Screen channel data in the channel data set
according to a data quality screening policy

S403: Send fourth information, where the fourth
information indicates a data amount, and the data amount
is an amount of the data that meets the data quality
requirement in the channel data set

S404: Send a first message, where the first message is
used to request a training data set of an intelligent model

S405: Send the training data set

FIG. 4

Communication
apparatus 500

Processing unit 510

Transceiver unit 520

Storage unit 530

FIG. 5

Communication device 600

Transceiver 610

Processor 620

Memory

FIG. 6

## INTERNATIONAL SEARCH REPORT

International application No.

**PCT/CN2022/133578**

**A. CLASSIFICATION OF SUBJECT MATTER**

H04W36/30(2009.01)i;H04B17/391(2015.01)i

According to International Patent Classification (IPC) or to both national classification and IPC

**B. FIELDS SEARCHED**

Minimum documentation searched (classification system followed by classification symbols)

H04B; H04W; H04L; G06N

Documentation searched other than minimum documentation to the extent that such documents are included in the fields searched

Electronic data base consulted during the international search (name of data base and, where practicable, search terms used)

CNTXT; CNKI; WPABSC; ENTXTC; 3GPP: 信道, 模型, 建模, 时延, 功率, 信噪比, 机器学习, 人工智能, 训练, channel, model, delay, power, SIR, SINR, machine learning, ML, artificial intelligence, AI, train+

**C. DOCUMENTS CONSIDERED TO BE RELEVANT**

| Category* | Citation of document, with indication, where appropriate, of the relevant passages | Relevant to claim No. |
|---|---|---|
| X | WO 2021077419 A1 (GUANGDONG OPPO MOBILE TELECOMMUNICATIONS CORP., LTD.) 29 April 2021 (2021-04-29) description, paragraphs 45-176 | 1-31 |
| A | CN 112527996 A (NEQUAL (BEIJING) DATA TECHNOLOGY CO., LTD.) 19 March 2021 (2021-03-19) entire document | 1-31 |
| A | CN 112529204 A (HUAWEI TECHNOLOGIES CO., LTD.) 19 March 2021 (2021-03-19) entire document | 1-31 |
| A | WO 2021051362 A1 (NOKIA SHANGHAI BELL CO., LTD.; NOKIA SOLUTIONS & NETWORKS OY;) 25 March 2021 (2021-03-25) entire document | 1-31 |
| A | WO 2021209023 A1 (HUAWEI TECHNOLOGIES CO., LTD.) 21 October 2021 (2021-10-21) entire document | 1-31 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **31 January 2023** | **07 February 2023** |

| Name and mailing address of the ISA/CN | Authorized officer |
|---|---|
| **China National Intellectual Property Administration (ISA/CN)** China No. 6, Xitucheng Road, Jimenqiao, Haidian District, Beijing 100088 | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/133578**

| Patent document cited in search report | | | Publication date (day/month/year) | Patent family member(s) | | | Publication date (day/month/year) |
|---|---|---|---|---|---|---|---|
| WO | 2021077419 | A1 | 29 April 2021 | EP | 4050812 | A1 | 31 August 2022 |
| | | | | EP | 4050812 | A4 | 31 August 2022 |
| | | | | US | 2022247469 | A1 | 04 August 2022 |
| CN | 112527996 | A | 19 March 2021 | None | | | |
| CN | 112529204 | A | 19 March 2021 | None | | | |
| WO | 2021051362 | A1 | 25 March 2021 | EP | 4032341 | A1 | 27 July 2022 |
| | | | | US | 2022376957 | A1 | 24 November 2022 |
| WO | 2021209023 | A1 | 21 October 2021 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111406870